# EUROPÄISCHE PATENTSCHRIFT

(11) **EP 1 889 202 B1**
(45) Veröffentlichungstag und Bekanntmachung des Hinweises auf die Patenterteilung: **22.09.2010**
(21) Anmeldenummer: 06755265.3
(22) Anmeldetag: 19.05.2006
(51) Int. Cl.: G06K 7/00

(54) **VORRICHTUNG UND VERFAHREN ZUM LESEN UND/ODER SCHREIBEN VON DATEN VON UND/ODER AUF EINE(R) VIELZAHL VON RFID-CHIPS**
DEVICE AND METHOD FOR READING AND/OR WRITING DATA FROM AND/OR TO A MULTIPLICITY OF RFID CHIPS
DISPOSITIF ET PROCEDE DE LECTURE ET/OU D'ECRITURE DE DONNEES SUR UNE PUCE RFID ET/OU SUR UNE PLURALITE DE PUCES RFID

(30) Priorität: 06.06.2005 DE 102005026183; 30.07.2005 DE 102005035848
(43) Veröffentlichungstag der Anmeldung: 20.02.2008
(73) Patentinhaber: Mühlbauer AG, 93426 Roding (DE)
(72) Erfinder: BROD, Volker, 93077 Bad Abbach (DE); BUFE, Henrik, 04317 Leipzig (DE); KUNZE, Wolfram, 02826 Görlitz (DE)
(74) Vertreter: Schmidt, Steffen
(86) Internationale Anmeldenummer: PCT/EP2006/062440
(87) Internationale Veröffentlichungsnummer: WO 2006/131439

(56) Entgegenhaltungen:
- EP-A- 1 429 371
- US-A1- 2002 081 180

## Beschreibung

Die Erfindung betrifft eine Vorrichtung und ein Verfahren zum Lesen und/oder Schreiben von Daten von und/oder auf eine(r) von in Smart-Labels angeordneten RFID-Chips innerhalb einer Smart-Label-Fertigungsvorrichtung gemäß den Oberbegriffen der Patentansprüche 1 und 9, wobei die Smart-Labels neben- und hintereinander auf einen gemeinsamen, fortlaufenden, folienartigen Band aufgebracht sind.

In Smart-Label-Fertigungsvorrichtungen werden mehrere tausend Smart-Labels pro Stunde fortlaufend produziert. Derartige Smart-Labels bestehen üblicherweise aus einer Antenne und einem damit verbundenen RFID (radio frequency identification)- Chip, und sind auf einen gemeinsamen Web, welches ein fortlaufendes Band aus einer Kunststofffolie, einem Papier oder dergleichen darstellt, sowohl hintereinander als auch nebeneinander mit einer geringen Beabstandung voneinander angeordnet.

Um eine Initialisierung derartiger RFID-Chips, die in den Smart-Labels angeordnet sind, zusammen mit einem Beschreiben und Lesen der RFID-Chips mit einer individuellen ID-Nummer sowie weiteren Daten durchzuführen, ist es für eine eindeutige Zuordnung der ID (Identifications)-Nummer zu einem bestimmten Smart-Label notwendig, ein ausgewähltes Smart-Label unabhängig von den benachbarten Smart-Labels ohne Beeinflussung derjenigen zu beschreiben und zu lesen. Dies geschieht üblicherweise mittels Hochfrequenzwellen-Übertragung von einer in der Vorrichtung angeordneten Antenne auf die Antenne des Smart-Labels.

Auch für eine sich anschließende Durchführung eines Funktionstests der Smart-Labels ist eine gezielte Auswahl ohne Beeinflussung durch benachbarte Smart-Labels eines bestimmten Smart-Labels notwendig. Dies erfordert bisher das einzelne Ansteuern einzelner Smart-Labels mittels der Schreib- und/oder Lesedaten übertragenden Antenne und einem damit verbundenen Schreib- und/oder Leseelement, wodurch sich aufgrund der einen Programmiervorgang darstellenden langen Inftialisierungszeiten von mehreren Sekunden pro Smart-Label eine Reduzierung des Durchsatzes der gesamten Fertigungsanlage ergibt, da mehr Smart-Labels hergestellt als anschließend initialisiert und getestet werden können

EP 1429371 A2 beschreibt eine Vorrichtung und Verfahren zum Lesen und/oder Schreiben von Daten von und/oder auf eine(r) Vielzahl von in Smart-Labels angeordneten RFID-Chips innerhalb einer Smart-Label-Fertigungsvorrichtung gemäß dem Oberbegriff der Ansprüche 1 und 9.

Der vorliegenden Erfindung liegt die Aufgabe Zugrunde eine verbesserte Vorrichtung und verbessertes Verfahren zur Verfügung zu stellen die zu einer Verminderung der Beeinflussung benachbarter Smart-Labels und zu einer geringeren Beeinflussung durch die benachbarten Smart-Labels während der Initialisierung und dem Testvorgang des ausgewählten Smart-Labels führt.

Diese Aufgabe wird vorrichtungsseitig durch die Merkmale des Patentanspruches 1 und verfahrensseitig durch die Merkmale des Patentanspruche 9 gelöst.

Hierdurch findet sowohl eine räumliche Trennung als auch eine Abschirmung der als Testerantennen und Initialisierungsantennen auftretenden zweiten Antennen gegenüber ihren benachbarten zweiten Antennen und der zu testenden ersten Antennen statt. Dies hat eine optimale Isolation der einzelnen zweiten Antennen (Testantennen) und gegebenenfalls der einzelnen Lese- und/oder Schreibelemente, welche mit den zweiten Antennen jeweils verbunden sind, zur Folge.

Durch eine derartige parallel stattfindende Initialisierung und Durchführung von Testvorgängen für die auf dem Band angeordnete, ausgewählte Menge an Smart-Label kann der Durchsatz der gesamten Fertigungsvorrichtung erhöht werden.

Die Lese- und/oder Schreibelemente sind sogenannte RFID-Reader, welche mittels Koaxialkabel mit den jeweils ihnen fest zugeordneten Testerantennen innerhalb des Antennenträgers verbunden sind.

Um eine geringstmögliche Beeinflussung benachbarter Testerantennen sowie den ihnen zugeordneten Smart-Labels während eines Initialisierungs- und/oder Testvorganges zu erhalten, können neben den durch die Vertiefungen erhaltenen räumlichen Trennungen beziehungsweise Abschirmungen unterschiedliche Arbeits- bzw. Übertragungsfrequenzen zwischen benachbarten Smart-Labels beziehungsweise den ihnen zugeordneten Schreib- und/oder Leseelementen verwendet werden. Hierbei bieten sich die für die RFID-Technologie von den jeweiligen Ländern jeweils freigegebenen Frequenzbänder an. Beispielsweise kann dieser Frequenzbereich abhängig von den Ländern zwischen 865 und 965 MHz liegen. Hierdurch ergibt sich die Möglichkeit, jeden RFID-Chip mit einer eigenen Arbeitsfrequenz zu bearbeiten. Durch eine frequenzselektive Eingangsschaltung der Schreib- und Leselemente werden benachbarte Übertragungsfrequenzen in ihre Wirkung deutlich reduziert bzw. gefiltert. Dadurch wird bei zeitgleicher Bearbeitung von benachbarten Smart Labels eine größtmögliche Vermeidung der gegenseitigen Beeinflussung erreicht.

Weiterhin kann neben der unterschiedlichen Arbeitsfrequenz und der räumlichen Trennung eine unterschiedliche Polarisation und Abstrahlcharakteristik der elektromagnetischen Wellen derartiger benachbarter zweiter Antennen (Testerantennen) verwendet werden, um die Gefahr einer gegenseitigen Beeinflussung noch weiter zu senken. Hierfür ist beispielsweise die Verwendung einer linksdrehenden (LHCP) und einer rechtsdrehenden (RHCP) Polarisation elektromagnetischer Wellen, die von verschiedenen benachbarten Lese- und/oder Schreibelementen mit ihnen zugeordneten zweiten Antennen ausgehen, denkbar. Dies ermöglicht eine Verbesserung des Leistungsfaktors von ca. 10 -15 dB.

Aufgrund der Verwendung dieser drei Unterscheidungs-Kenngrößen zwischen benachbarten zu initialisierenden und testenden Smart-Labels, nämlich verschiedener Arbeitsfrequenzen, verschiedener Polarisationen und verschiedener Vertiefungen innerhalb des Antennenträgers, werden Dämpfungswerte von 30 - 40 dB (1:1.000-1:10.000) zwischen den einzelnen Testsystemen in Bezug auf die Breite von einem Smart-Label erreicht.

Ein Abstand zwischen der Oberfläche des Antennenträgers und der in der Vertiefung angebrachten zweiten Antenne ist vorzugsweise ebenso wie ein Drehwinkel einer um eine senkrecht auf der Oberfläche stehenden Drehachse durchführbaren Drehung der zweiten Antenne einstellbar. Dies hat eine optimierte Ausrichtung der zweiten Antennen gegenüber den ersten Antennen, die in den Smart-Labels angeordnet sind, zur Folge. Somit ergibt sich eine optimierte Übertragung der Lese- und/oder Schreibdaten von den Lese- und/oder Schreibelementen über die zweiten Antennen und die ersten Antennen auf die RFID-Chips der Smart-Labels.

In den vertiefungsfreien Bereichen der Oberfläche des Antennenträgers sind vorzugsweise Luftlöcher zum Ansaugen des Bandes, welches vorzugsweise oberhalb des flach ausgebildeten Antennenträgers liegt, angeordnet, um während der Übertragung der Lese- und/oder Schreibdaten eine optimierte Ausrichtung der ersten und zweiten Antennen sowie eine räumliche Begrenzung des Systems "Vertiefung - darin angeordnete zweite Antenne - direkt darüberliegende erste Antenne - RFID-Chip" zu erhalten.

Gemäß einer bevorzugten Ausführungsform ist die Oberfläche des Antennenträgers zumindest teilweise aus Metall, sodass sich eventuell bildende induzierte Wirbelstürme über das durch die Metalloberfläche erzeugbare Massepotential abgeführt werden können. Hierfür ist die Oberfläche vorzugsweise aus einem hochleitfähigen Metall, wie Kupfer.

Ebenso können Wandungen, wie diejenigen der Vertiefungen, aus derartigem Material sein. Die gesamte metallisch ausgebildete Struktur des Antennenträgers stellt somit das Massepotential von eventuell an die zweiten Antennen angeschlossenen Koaxialkabeln dar. Sämtliche Nahtstellen der Vertiefungen und der metallischen Oberfläche sind im optimalen Fall umlaufend hochfrequenzdicht mit Metall verschlossen.

Die zweiten Antennen weisen gemäß einer bevorzugten Ausführungsform zwei sich kreuzende Doppeldipole auf, die als Microstripes ausgebildet sein können. Diese Ausbildung der Antennen ermöglicht eine scharf umrandete Abstrahlung der elektromagnetischen Wellen in Richtung des anvisierten Smart-Labels. Dieses spezielle Antennenlayout kann beispielsweise ein Frequenzbereich um 900 MHz zur Anwendung kommen.

Die von derartigen Antennen abgestrahlten elektromagnetischen Wellen zeigen eine rechts- oder linksdrehende zirkulare Polarisation. Eine Anpassung an eventuell vorhandenen Koaxialkabeln wurde derart gewählt, dass sich bei den angestrebten Arbeitsfrequenzen ein reeller Eingangswiderstand von 50 Ω ergibt.

Vorteilhaft sind zwei oder mehr Antennenträger innerhalb einer Ebene, vorzugsweise unterhalb des Bandes, angeordnet, die sich sowohl in Bandlängs- als auch in Bandquerrichtung verschieben lassen, um eine genaue Zuordnung zu den zu überprüfenden Smart-Labels zu ermöglichen.

Ein Verfahren zum Lesen und/oder Schreiben von Daten von und/oder auf eine(r) Vielzahl von in Smart-Labels angeordneten RFID-Chips innerhalb einer Smart-Label-Fertigungsvorrichtung zeichnet sich durch die gleichzeitige Übertragung der Lese- und/oder Schreibdaten mittels verschiedener Lese- und/oder Schreibelemente, die ebenso wie die ihnen zugeordneten zweiten Antennen unmittelbar benachbart zueinander angeordnet sind, bei verschiedenen Frequenzen und Polarisationen und räumlichen Trennungen aus, ohne eine gegenseitige Beeinflussung zu bewirken.

Weitere vorteilhafte Ausführungsformen ergeben sich aus den Unteransprüchen.

Vorteile und Zweckmäßigkeiten sind der nachfolgende Beschreibung in Verbindung mit der Zeichnung zu entnehmen. Hierbei zeigen:
- Fig. 1: in einer schematischen Darstellung eine Draufsicht einer Doppeldipolan- tenne zur Verwendung in einer erfindungsgemäßen Vorrichtung gemäß ei- ner Ausführungsform der Erfindung;
- Fig. 2: eine perspektivische Ansicht einer Doppeldipolantenne zur Verwendung in einer erfindungsgemäßen Vorrichtung;
- Fig. 3: in einer schematischen Draufsicht die erfindungsgemäße Vorrichtung ge- mäß einer Ausführungsform der Erfindung;
- Fig. 4: in einer perspektivischen Darstellung die erfindungsgemäße Vorrichtung gemäß der Ausführungsform der Erfindung;
- Fig. 5: in einer perspektivischen Darstellung die erfindungsgemäße Vorrichtung gemäß der Ausführungsform der Erfindung ohne darüberliegendes Smart- Label aufweisendes Band und
- Fig. 6: in einer vergrößerten Darstellung die erfindungsgemäße Vorrichtung ge- mäß der Ausführungsform der Erfindung.

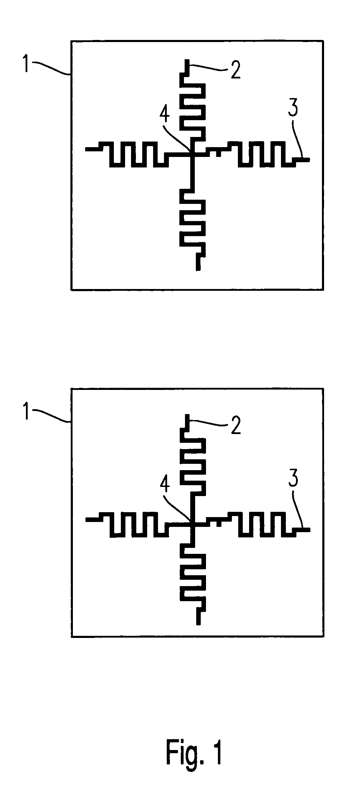

In Fig. 1 wird in der linken Darstellung eine sich kreuzende Dipolantenne für eine rechtsdrehende Polarisation und in der rechten Darstellung eine sich kreuzende Doppeldipolantenne für die Erzeugung einer linksdrehenden Polarisation dargestellt.

Beide Doppeldipolantennen zeichnen sich durch unterschiedliche Abmaße in ihren Ausdehnungen, wie es durch die Maßeinheiten dargestellt wird, aus.

Auf einem kleinen Plattenelement 1 sind die beiden Dipolantennen 2, 3 derart angeordnet, dass sie sich in einem zentralen Punkt 4 kreuzen.

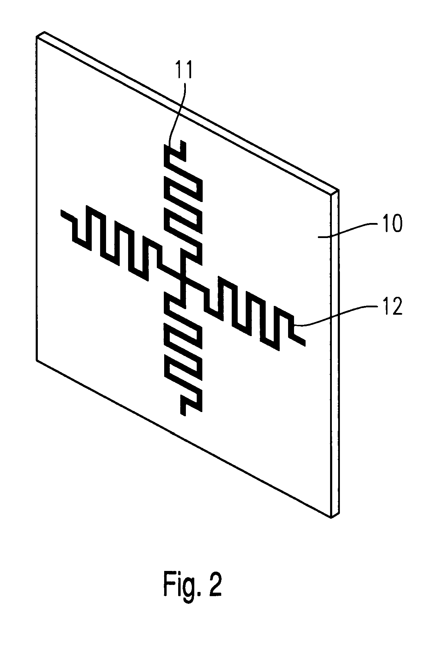

In Fig. 2 wird in einer perspektivischen Darstellung die Doppeldipolantenne, wie sie für die erfindungsgemäße Vorrichtung verwendet werden kann, gezeigt. Wiederum verlaufen auf einem Plattenelement 10 zwei beispielsweise aufgedruckte Doppeldipole 11, 12 im rechten Winkel zueinander derart, dass sie sich im Zentrum des dargestellten Vierecks des Plattenelements 10 kreuzen.

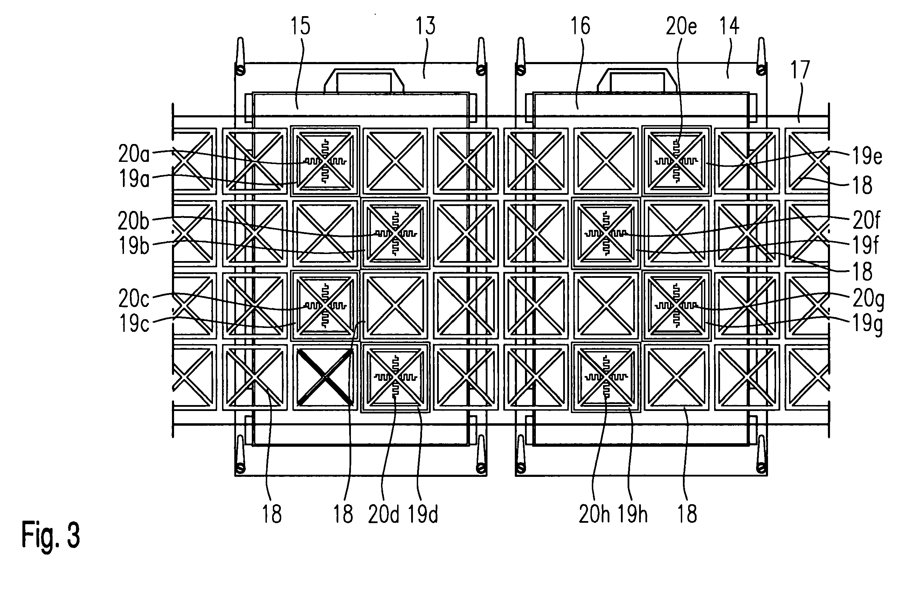

In Fig. 3 wird in einer Draufsicht die erfindungsgemäße Vorrichtung gemäß einer Ausführungsform der Erfindung gezeigt. Der Darstellung ist zu entnehmen, dass jeder Antennenträger aus einem Grundgestell 11, 14 und einer darauf aufgesetzten Abschirmungsplatte 15, 16 zusammengesetzt ist. Über beide Antennenträger hinweg verläuft ein folienartiges Band 17, auf welchem eine Vielzahl von Smart-Labels 18, 19a-h eng zueinander beabstandet angeordnet ist.

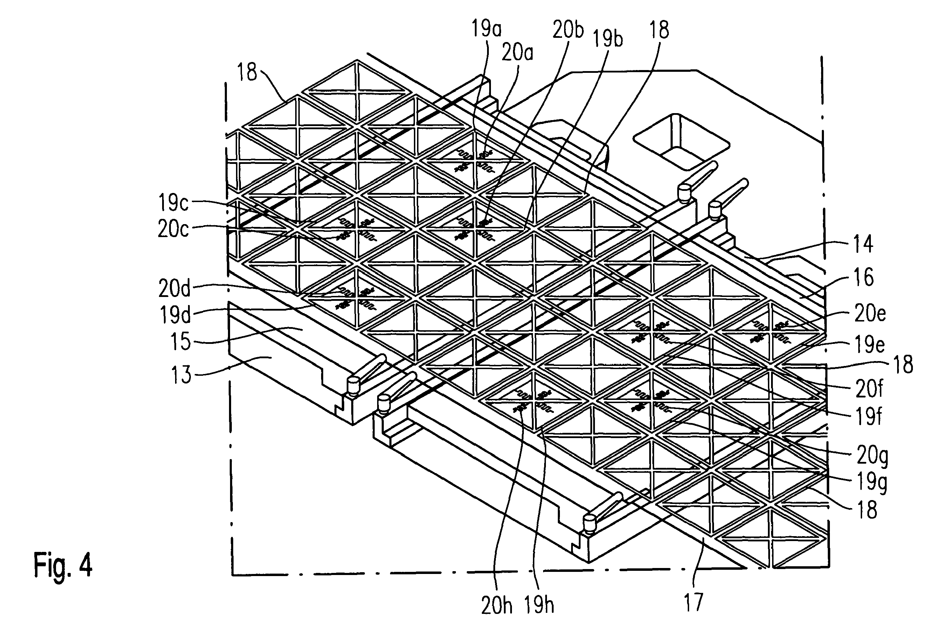

Die Smart-Labels 19a-19h sind über zweite Antennen 20a, 20h angeordnet, welche, wie es aus Figur 4 ersichtlich ist, innerhalb Vertiefungen der Abschirmungsplatten 15, 16 platziert sind. Hierdurch ergibt sich eine räumliche Trennung und elektromagnetische Isolierung dieser zweiten Antennen mit darunterliegenden hier nicht gezeigten Lese- und/oder Schreibelementen.

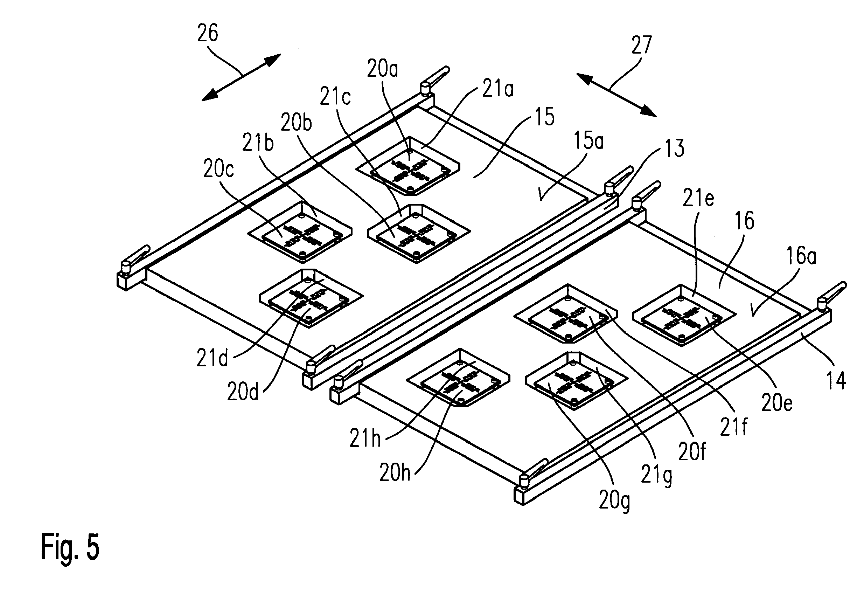

Aus der in Figur 5 dargestellten perspektivischen Darstellung der erfindungsgemäßen Vorrichtung ohne das darüberverlaufende Band sind deutlich die Vertiefungen 21a - 21d und 21e - 21 h ersichtlich. Vorzugsweise weisen derartige Vertiefungen eine Tiefe auf, die es zulässt, dass die zweiten Antennen mit ihren gesamten Antennenkörper in dieser Vertiefung derart aufgenommen werden, dass sie oben nicht hervorstehen.

Die zweiten Antennen, die als Test- und Initialisierungsantennen dienen, weisen eine Strahlungscharakteristik auf, welche für deren Anwendung eine Übertragung der Daten innerhalb eines Nahfeldes optimiert ermöglichen. Grundsätzlich kann hierbei bei zwei benachbarten Antennen eine Abstrahlung elektromagnetischer Wellen mit unterschiedlichen Polarisationen, wie beispielsweise einer Kombination aus zirkularen und linear ausgebildeten Polarisationen, verwendet werden. Dies ermöglicht eine Verringerung der Beeinflussung durch benachbarte Antennen.

Gemäß den Doppelpfeilen 26, 27 können die Antennenträger sowohl in Längs- als auch in Breitenrichtung des darüberverlaufenden Bandes 17 verschoben werden, um eine optimierte

Ausrichtung der Testantennen 20a-h gegenüber den zu testenden Antennen beziehungsweise Smart-Labels 19a-h zu erreichen.

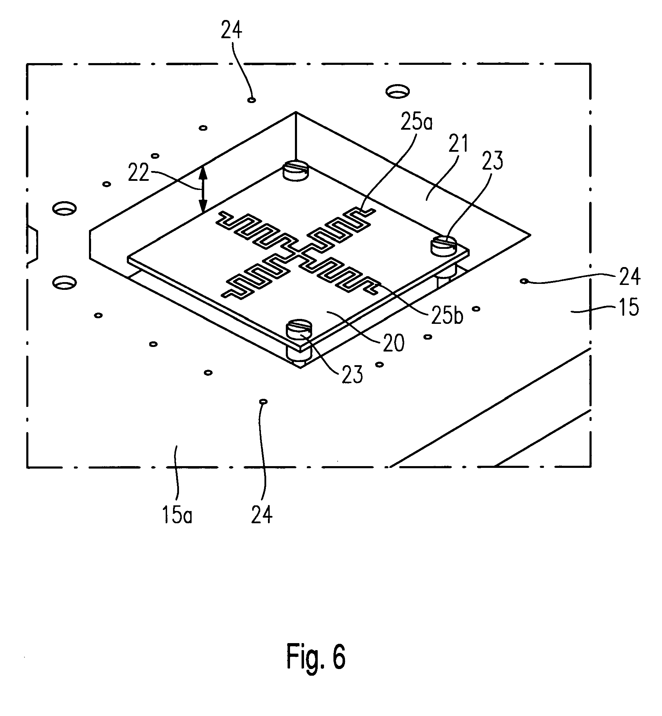

In Fig. 6 wird in einer vergrößerten Darstellung perspektivisch eine Vertiefung 21 mit der darin angeordneten zweiten Antenne 20, welche zwei Doppeldipole 25a und 25b aufweist, dargestellt. Die Vertiefung 21 weist idealerweise zur Optimierung einer räumlichen Trennung gegenüber benachbarten zweiten Antennen schachtähnliche Wände auf. Die in der Vertiefung 21 angeordnete Antenne 20 kann mittels der Schrauben 23 in ihrem Abstand zu der Oberfläche der Abschirmungsplatte 15 variiert werden, wie es durch den Doppelpfeil 22 wiedergegeben wird.

Rings um die Vertiefung 21 sind an der Oberfläche der Abschirmungsplatte 15 Luftlöcher 24 angeordnet, um mittels Unterdruck die zu der Vertiefung benachbarten Folienanteile des Bandes 17 während der Initialisierungs- und Testphase anzusaugen.

### Bezugszeichenliste

- 1,10: Grundlatte
- 2, 3, 11, 12, 25a, 25b: Doppeldipole
- 4: Kreuzungspunkt
- 13, 14: Grundgestell des Antennenträgers
- 15, 16: Abschirmungsplatten des Antennenträgers
- 17: Band
- 18, 19a-19h: Smart-Labels
- 20a, 20h: zweite Antennen
- 21 a, 21 h: Vertiefungen
- 22: Höhenverstellung der Antennen
- 23: Befestigungsschreiben der Antennen
- 24: Luftlöcher
- 26, 27: Verschieberichtungen der Antennenträger

## Patentansprüche

1. Vorrichtung zum Lesen und/oder Schreiben von Daten von und/oder auf eine(r) Vielzahl von in Smart-Labels (18;19a-h) angeordneten RFID-Chips innerhalb einer Smart-Label-Fertigungsvorrichtung, wobei die Smart-Labels (18; 19a-h) mit jeweils einer ersten Antenne neben- und hintereinander auf einem gemeinsamen fortlaufenden, folienartigen Band (17) aufgebracht sind, wobei
jedem Smart-Label (19a-h) aus einer ausgewählten Menge von neben- und/oder hintereinander angeordneten Smart-Labels (19a-h) jeweils eine zweite Antenne (20; 20a-h; 25a, 25b; 11, 12; 2,3) zur gleichzeitigen Übertragung von Lese- und/oder Schreibdaten zwischen den ersten und zweiten Antennen (20; 20a-h; 25a, 25b; 11, 12; 2, 3) mittels Ultrahochfrequenzwellen zugeordnet ist, wobei die zweiten Antennen (20;20a-h, 25a, 25b) innerhalb mindestens eines gemeinsamen Antennenträgers (13-16) flächig angeordnet sind, **dadurch gekennzeichnet, dass** jede zweite Antenne (20; 20a-h; 25a, 25b) in einer Vertiefung (21; 21 a-h) des an seiner zum Band (17) hingewandten Oberfläche (15a, 16a) flach ausgebildeten Antennenträgers (13-16) mit ihren gesamten Antennenkörper und jeweils einem damit verbundenen Lese- und/oder Schreibelement angeordnet ist.

2. Vorrichtung nach Anspruch 1,
**dadurch gekennzeichnet, dass**
ein Abstand zwischen der Oberfläche (15a, 16a) und der in der Vertiefung (21; 21a-h) angebrachten zweiten Antenne (20; 20a-h) einstellbar ist und/oder ein Drehwinkel einer um eine senkrecht auf der Oberfläche stehenden Drehachse durchführbaren Drehung der zweiten Antenne (20; 20a-h) einstellbar ist.

3. Vorrichtung nach Anspruch 1 oder 2,
**dadurch gekennzeichnet, dass**
in vertiefungsfreien Bereichen der Oberfläche (15a, 16a) des Antennenträgers (13-16) Luftlöcher (24) zum Ansaugen des Bandes (17) an die Ober fläche (15a, 16a) während der Übertragung der Lese- und/oder Schreibdaten angeordnet sind.

4. Vorrichtung nach einem der Ansprüche 1-3,
**dadurch gekennzeichnet, dass**
die Oberfläche (15a, 16a) zumindest teilweise aus Metall ist

5. Vorrichtung nach einem der vorangegangenen Ansprüche,
**dadurch gekennzeichnet, dass**
die auf dem mindestens einen gemeinsamen Antennenträger (13-16) angeordneten zweiten Antenne (20; 20a-h) unterschiedliche Übertragungs-UH-Frequenzen aufweisen.

6. Vorrichtung nach einem der vorangegangenen Ansprüche,
**dadurch gekennzeichnet, dass**
zwei auf dem mindestens einen gemeinsamen Antennenträger (13-96) benachbart angeordnet zweite Antennen (20 a-h) unterschiedlich polarisierte elektromagnetische Wellen abstrahlen.

7. Vorrichtung nach einem der vorangegangenen Ansprüche,
**dadurch gekennzeichnet, dass**
eine oder mehrere zweite Antennen (1; 10; 20; 20a-h) als zwei sich kreuzende doppelte Dipole (2, 3; 11, 12; 25a, 25b) ausgebildet ist/sind.

8. Vorrichtung nach einem der vorangegangenen Ansprüche,
**gekennzeichnet durch**
einen zweiten Antennenträger (14, 16), der gegenüber dem ersten Antennenträger (13, 15) in Bodenlängs- und - querrichtung verschiebbar ist.

9. Verfahren zum Lesen und/oder Schreiben von Daten von und/oder auf eine(r) Vielzahl von in Smart-Labels (18; 19a-h) angeordneten RFID-Chips innerhalb einer Smart-Label-Fertigungsvorrichtung, wobei die Smart-Labels (18; 19a-h) mit jeweils einer ersten Antenne neben- und hintereinander auf einem gemeinsamen, fortlaufenden, folienartigen Band (17) aufgebracht werden, wobei
jedem Smart-Label (19a-h) aus einer ausgewählten Menge von neben- und/oder hintereinander angeordneten Smart-Labels (19a-h) jeweils eine zweite Antenne (20; 20a-h; 11, 12; 2, 3) zugeordnet wird, um Lese- und/oder Schreibdaten mittels Ultrahochfrequenzwellen zwischen den zweiten und ersten Antennen gleichzeitig zu übertragen, die wobei zweiten Antennen (20; 20a-h; 25a, 25b) innerhalb mindestens eines gemeinsamen Antennenträgers (13-16) flächig angeordnet werden, **dadurch gekennzeichnet, dass** jede zweite Antenne (20; 20a-h; 25a, 25b) in einer Vertiefung (21; 21a - h) des an seiner zum Band (17) hingewandten Oberfläche (15a, 16a) flach ausgebildeten Antennenträgers (13 -16) mit ihrem gesamten Antennenkörper und jeweils einem damit verbundenen Lese- und/oder Schreibelement angeordnet werden.

10. Verfahren nach Anspruch 9,
**dadurch gekennzeichnet, dass**
die zweiten Antennen (20; 20a-h; 25a, 25b) die Daten mit unterschiedlichen Übertragungs-UH-Frequenzen übertragen.

11. Verfahren nach Anspruch 9 oder 10,
**dadurch gekennzeichnet, dass**
zwei benachbarte zweite Antennen (20; 20a-h) elektromagnetische Strahlen mit unterschiedlicher Polarisation aussenden,

12. Verfahren nach einem der Ansprüche 9 -11,
**dadurch gekennzeichnet, dass**
ein Abstand zwischen einer Oberfläche (15a, 16a) des flach ausgebildeten Antennenträgers (13-16) und der innerhalb Vertiefungen (21; 21 a-h) des Antennenträgers (13-16) eingesetzten zweiten Antennen (20; 20a-b) eingestellt wird.

13. Verfahren nach einem der Ansprüche 9 - 12,
**dadurch gekennzeichnet, dass**
das Lesen und/oder Schreiben der Daten eine Initialisierung des RFID-Chips darstellt.

14. Verfahren nach einem der Ansprüche 9 -13,
**dadurch gekennzeichnet, dass**
das Lesen der Daten ein Verfahren zum Testen der RFID-Chips darstellt.

## Claims

1. Device for reading and/or writing data from and/or to a multiplicity of RFID chips arranged in smart labels (18; 19a-h) within a smart label production device, wherein the smart labels (18; 19a-h) each comprising a first antenna are applied next to and behind one another on a common continuous film-like strip (17), wherein
each smart label (19a-h) from a selected set of smart labels (19a-h) arranged next to and/or behind one another is respectively assigned a second antenna (20; 20a-h; 25a, 25b; 11, 12; 2, 3) for the simultaneous transmission of read and/or write data between the first and second antennas (20; 20a-h; 25a, 25b; 11, 12; 2, 3) by means of ultrahigh frequency waves, wherein
the second antennas (20; 20a-h; 25a, 25b) are arranged in a planar manner within at least one common antenna carrier (13-16),
**characterised in that**
each second antenna (20; 20a-h; 25a, 25b) is arranged with its entire antenna body and in each case an associated read and/or write element within a depression (21, 21a-h) of the antenna carrier (13-16), which is of flat design on its surface (15a, 16a) facing towards the strip (17).

2. Device according to claim 1,
**characterised in that**
a distance between the surface (15a, 16a) and the second antenna (20; 20ah) inserted in the depression (21; 21a-h) is adjustable and/or a rotation angle of a rotation of the second antenna (20; 20a-h), which can be carried out about an axis of rotation perpendicular to the surface, is adjustable.

3. Device according to claim 1 or 2,
**characterised in that**
air holes (24) for sucking the strip (17) against the surface (15a, 16a) during the transmission of the read and/or write data are arranged in depression-free regions of the surface (15a, 16a) of the antenna carrier (13-16).

4. Device according to one of claims 1 to 3,
**characterised in that**
the surface (15a, 16a) is at least partially made of metal.

5. Device according to one of the preceding claims,
**characterised in that**
the second antennas (20; 20a-h) arranged on the at least one common antenna carrier (13-16) have different UH transmission frequencies.

6. Device according to one of the preceding claims,
**characterised in that**
two second antennas (20a-h) arranged adjacent to one another on the at least one common antenna carrier (13-16) emit differently polarised electromagnetic waves.

7. Device according to one of the preceding claims,
**characterised in that**
one or more second antennas (1; 10; 20; 20a-h) is/are designed as two intersecting double dipoles (2; 3; 11; 12; 25a; 25b).

8. Device according to one of the preceding claims,
**characterised by**
a second antenna carrier (14, 16) which can be displaced in the longitudinal and transverse direction of the base with respect to the first antenna carrier (13, 15).

9. Method for reading and/or writing data from and/or to a multiplicity of RFID chips arranged in smart labels (18; 19a-h) within a smart label production device, wherein the smart labels (18; 19a-h) each comprising a first antenna are applied next to and behind one another on a common continuous film-like strip (17), wherein
each smart label (19a-h) from a selected set of smart labels (19a-h) arranged next to and/or behind one another is respectively assigned a second antenna (20; 20a-h; 11, 12; 2, 3) for simultaneously transmitting read and/or write data between the first and second antennas by means of ultrahigh frequency waves,
wherein the second antennas (20; 20a-h; 25a, 25b) are arranged in a planar manner within at least one common antenna carrier (13-16),
**characterised in that**
each second antenna (20; 20a-h; 25a, 25b) is arranged with its entire antenna body and in each case an associated read and/or write element within a depression (21; 21a-h) of the antenna carrier (13-16), which is of flat design on its surface (15a, 16a) facing towards the strip (17).

10. Method according to claim 9,
**characterised in that** the second antennas (20; 20a-h; 25a, 25b) transmit the data at different UH transmission frequencies.

11. Method according to claim 9 or 10,
**characterised in that**
two adjacent second antennas (20; 20a-h) emit electromagnetic waves with different polarisation.

12. Method according to one of claims 9 to 11,
**characterised in that**
a distance between a surface (15a, 16a) of the flat antenna carrier (13-16) and the second antennas (20; 20a-h) inserted within depressions (21; 21a-h;) of the antenna carrier (13-16) is adjusted.

13. Method according to one of claims 9 to 12,
**characterised in that**
the reading and/or writing of the data represents an initialisation of the RFID chip.

14. Method according to one of claims 9 to 13,
**characterised in that**
the reading of the data represents a method for testing the RFID chips.

## Revendications

1. Dispositif de lecture et/ou d'écriture de données depuis et/ou sur une pluralité de puces RFID disposées dans des étiquettes intelligentes (18 ; 19a à 19h) à l'intérieur d'une installation de fabrication d'étiquettes intelligentes, lesdites étiquettes intelligentes (18 ; 19a à 19h) munies chacune d'une première antenne étant montées les unes à côté des autres et les unes derrière les autres sur une bande (17) continue commune se présentant sous la forme d'un film, une deuxième antenne (20 ; 20a à 20h ; 25a, 25b ; 11, 12 ; 2, 3), destinée à la transmission simultanée de données de lecture et/ou d'écriture entre les premières et les deuxièmes antennes (20 ; 20a à 20h ; 25a, 25b ; 11, 12 ; 2, 3), étant associée au moyen d'ondes hyperfréquences à chaque étiquette intelligente (19a à 19h) faisant partie d'une quantité choisie d'étiquettes intelligentes (19a à 19h) disposées les unes à côté des autres et/ou les unes derrière les autres, lesdites deuxièmes antennes (20 ; 20a à 20h ; 25a, 25b) étant disposées à plat à l'intérieur d'au moins un support d'antennes (13 à 16) commun,
**caractérisé en ce que** chaque deuxième antenne (20 ; 20a à 20h ; 25a, 25b) est, avec tout son corps d'antenne et un élément de lecture et/ou d'écriture qui lui est relié, disposée dans un évidement (21 ; 21a à 21h) du support d'antennes (13 à 16) réalisé plat à sa surface (15a, 16a) tournée vers la bande (17).

2. Dispositif selon la revendication 1,
**caractérisé en ce qu** il est possible de régler un écart entre la surface (15a, 16a) et la deuxième antenne (20 ; 20a à 20h) montée dans l'évidement (21 ; 21a à 21h) et/ou un angle de rotation de la deuxième antenne (20 ; 20a à 20h) autour d'un axe de rotation placé verticalement sur la surface.

3. Dispositif selon la revendication 1 ou 2,
**caractérisé en ce que** des évents destinés à aspirer la bande (17) vers la surface (15a, 16a) pendant la transmission des données de lecture et/ou d'écriture sont disposés dans les zones exemptes d'évidements de la surface (15a, 16a) du support d'antennes (13 à 16).

4. Dispositif selon l'une des revendications 1 à 3,
**caractérisé en ce que** ladite surface (15a, 16a) est constituée au moins partiellement de métal.

5. Dispositif selon l'une des revendications précédentes,
**caractérisé en ce que** les deuxièmes antennes (20 ; 20a à 20h) disposées sur ledit support d'antennes (13 à 16) commun présentent des hyperfréquences de transmission différentes.

6. Dispositif selon l'une des revendications précédentes,
**caractérisé en ce que** deux deuxièmes antennes (20a à 20h) disposées de manière avoisinante sur ledit support d'antennes (13 à 16) commun émettent des ondes électromagnétiques polarisées de manière différente.

7. Dispositif selon l'une des revendications précédentes,
**caractérisé en ce qu'**une ou plusieurs deuxièmes antennes (1 ; 10 ; 20 ; 20a à 20h) est/sont réalisée(s) comme deux dipôles doubles (2, 3 ; 11, 12 ; 25a, 25b) qui se croisent.

8. Dispositif selon l'une des revendications précédentes,
**caractérisé par** un deuxième support d'antennes (14, 16) déplaçable dans la direction longitudinale et transversale du fond par rapport au premier support d'antennes (13, 15).

9. Procédé de lecture et/ou d'écriture de données depuis et/ou sur une pluralité de puces RFID disposées dans des étiquettes intelligentes (18 ; 19a à 19h) à l'intérieur d'une installation de fabrication d'étiquettes intelligentes, lesdites étiquettes intelligentes (18 ; 19a à 19h) munies chacune d'une première antenne étant montées les unes à côté des autres et les unes derrière les autres sur une bande (17) continue commune se présentant sous la forme d'un film, une deuxième antenne (20 ; 20a à 20h ; 11, 12 ; 2, 3), destinée à la transmission simultanée de données de lecture et/ou d'écriture entre les deuxièmes et les premières antennes au moyen d'ondes hyperfréquences étant associée à chaque étiquette intelligente (19a à 19h) faisant partie d'une quantité choisie d'étiquettes intelligentes (19a à 19h) disposées les unes à côté des autres et/ou les unes derrière les autres, lesdites deuxièmes antennes (20 ; 20a à 20h ; 25a, 25b) étant disposées à plat à l'intérieur d'au moins un support d'antennes (13 à 16) commun,
**caractérisé en ce que** chaque deuxième antenne (20 ; 20a à 20h ; 25a, 25b) est, avec tout son corps d'antenne et un élément de lecture et/ou d'écriture qui lui est relié, disposée dans un évidement (21 ; 21a à 21h) du support d'antennes (13 à 16) réalisé plat à sa surface (15a, 16a) tournée vers la bande (17).

10. Procédé selon la revendication 9,
**caractérisé en ce que** les deuxièmes antennes (20 ; 20a à 20h ; 25a, 25b) transmettent les données à des hyperfréquences de transmission différentes.

11. Procédé selon la revendication 9 ou 10,
**caractérisé en ce que** deux deuxièmes antennes (20 ; 20a à 20h) voisines émettent des rayons électromagnétiques de polarisation différente.

12. Procédé selon l'une des revendications 9 à 11,
**caractérisé en ce qu'**un écart est réglé entre une surface (15a, 16a) du support d'antennes (13 à 16) réalisé plat et les deuxièmes antennes (20 ; 20a à 20b) placées à l'intérieur d'évidements (21 ; 21a à 21h) du support d'antenne (13 à 16).

13. Procédé selon l'une des revendications 9 à 12,
**caractérisé en ce que** la lecture et/ou l'écriture des données représentent une initialisation de la puce RFID.

14. Procédé selon l'une des revendications 9 à 13,
**caractérisé en ce que** la lecture des données représente un procédé pour tester les puces RFID.
